# EUROPEAN PATENT SPECIFICATION

(11) **EP 1 044 613 B1**
(45) Date of publication and mention of the grant of the patent: **15.10.2003**
(21) Application number: 00830276.2
(22) Date of filing: 12.04.2000
(51) Int. Cl.: A23G 9/02, A21D 13/08, A21D 13/00

(54) **Edible container**
Essbare Behälter
Récipient comestible

(30) Priority: 12.04.1999 IT RM990217
(43) Date of publication of application: 18.10.2000
(73) Proprietor: Foodinvest Group S.r.l., 64020 Teramo (IT)
(72) Inventor: Malavolta, Aristide Romano, 64020 Bellante Stazione (Teramo) (IT)
(74) Representative: Cioncoloni, Giuliana, Dr.

(56) References cited:
- EP-A- 0 219 462
- EP-A- 0 293 552
- EP-A- 0 787 435
- DE-A- 3 921 454
- DE-A- 4 239 143
- FR-A- 2 680 635
- GB-A- 947 672
- US-A- 1 637 556
- US-A- 3 541 587
- US-A- 4 603 051
- US-A- 5 709 898

## Description

This invention relates to foodstuffs and, in particular, an edible container for ice-creams and cold creams.

As known, ice-creams that people eat walking, whether handicraft or industrial products, need in any case a holder to be gripped. This holder can be comprised of a stick, an edible conical wafer or comet, a disposable variously shaped container, or a couple of sandwich biscuits, and so on.

This invention starts from the consideration that in the ice-cream holder in use today, of the kind above mentioned, in general the support structural function is more relevant than the food qualities thereof, also in the event the ice-cream holder is made of an edible material. In other words, the present ice-cream container is little exploited in regard of its organoleptic characteristics to advantage the properties of the ice-cream. For example, the comet is made of not very sweet, gently flavoured flour pastry, that is cooked without fats between two plates, and acts only to enhance the ice-cream taste.

When an ice-cream, in general of a packaged kind, i.e. industrially produced, is sandwiched between biscuits, the biscuit bases give the product characteristics broadly similar to those of a slice of ice-cream cake, in which an oven cooked pastry base retains a cold cream.

However, the sandwiched ice-cream has some drawbacks that appear when the ice-cream is eaten. Since the sides of the sandwiched ice-cream, that are adjoining the biscuit bases, are open, the ice-cream has to be eaten rather fast; otherwise, also since the hands are near the ice-cream, the cold cream tends to melt quickly and to drop.

Moreover, when the ice-cream has to be eaten greedily, the biscuit consistency must be soft but, as a result of this, the biscuits give consequently a musty taste to the ice-cream. On the contrary, whereas the biscuits were crisp, the ice-cream, retained between the biscuit bases, would spurt all over upon a compression on the biscuit bases without any cut by teeth of the person eating. EP-A-0219462 discloses an oven baked short-pastry edible container for ice-creams. US-A-4603051 discloses an edible food containers and a method of coating said containers. Also GB-A-947672 discloses vegetable oil sprayed on baked pastry cone. US-A-3541587 relates to a composition for moulded containers for comestibles such as ice cream. US-A-1637556 discloses edible containers for ice-creams having a structure made of moulded and baked mixture. All these documents do not teach particular recipes for short-pastry edible container.

An object of the invention is to allow a person, eating an ice-cream or dessert while walking, to taste together a cold cream and a container of the same without being obliged to eat all at once, fearing that the cold cream can undergo physical changes from its characteristics of an aerated and soft cream.

Another object of the invention is to give an ice-cream container organoleptic characteristics that are different from those of a comet or a biscuit of a sandwiched ice-cream between biscuits, the ice-cream saving such a state that it can be eaten while walking.

Therefore, the present invention provides an edible container for ice-creams and cold creams having a structure made of moulded, and oven cooked mixture, comprising walls that are not very permeable to liquids and enclose an internal space, designed to receive ice-cream or cold cream and communicating with the outside through at least an opening.

The mixture is moulded, i.e. the container is made mechanically by means of moulds according to the desired shape, volume and dimensions.

An edible container according to the present invention gives a person the advantage of choosing not only in which physical state to eat the ice-cream as the person likes more, i.e. in a solid, soft or semifluid state, but also in which way to taste it, e.g. greedily, i.e. eating container and cold cream together, licking it, or taking the cold cream with an ice-cream spoon.

The present invention will be described below with reference to an embodiment thereof, although it should be appreciated that changes can be brought without departing from the scope of the invention, and to the figure of the enclosed drawing, in which:

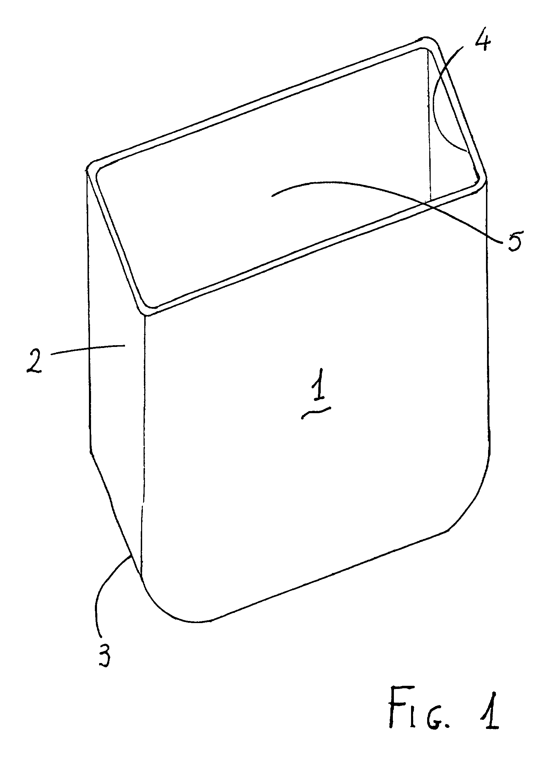

Figure 1 is a perspective view of an edible container according to the present invention.

Referring to Figure 1, a general aspect of an edible container for ice-creams and cold creams is shown. The edible container is illustrated having a prismatic shape provided with flat side walls (two consecutive walls 1 and 2 are shown) and a round bottom 3. The container is lacking in the wall corresponding to the upper face, in which an opening 4 is provided. The internal space defined by the walls and the bottom of the container is designated as 5. It has to be appreciated that the shape of the container as shown is only indicative of a structure of container provided with an opening. Any other shape, such as cylindrical, conical, frustoconical, parallelepiped (with cross sections varying from rectangular to circular, elliptical, triangular, squared, etc. ) can be adopted. Further, the capacity of the internal space can be selected in the desired measure.

The structure of the edible container for ice-creams and cold creams is made from a mixture that is moulded and then oven cooked. The mixture is constituted by short pastry. The manufacturing process of the edible container according to the present invention comprises the following steps: preparation of the pastry, after mixing its ingredients; transportation of the pastry to a moulding apparatus constituted by a mould and a counter-mould having variable characteristics; moulding of the container; opening of the moulds and ejection of the container; oven cooking; cooling; storing of the container using suitable packaging materials, that assure the preservation of the organoleptic properties such as consistency and taste.

By its nature, the short pastry is not very permeable to liquids and then it doesn't need particular impermeabilization treatments, that are necessary instead for the cornet. Further, the mixture used has just this purpose. It is obvious that the surfaces of the walls of the container can be covered by a film of aromatised vegetable oil. The vegetable oil acts as a protective barrier also from any external substance, for a preservation able to keep its original properties intact, by preventing the water migration from the ice-cream to the container.

As for the organoleptic characteristics of the oven cooked short pastry, it has a pleasant, preferably sweet, taste. The cooked pastry has brown colour and solid and homogeneous consistency. The ingredients of the mixture of short pastry are listed in the Table 1 below. Ingredient ranges expressed in percent by weight are indicated beside the same.

**Table 1**

| | |
|---|---|
| Icing sugar | 15 - 25 |
| Margarine MV1 | 8 - 15 |
| Albumen | 4 - 10 |
| Fresh milk | 5 - 15 |
| Wheat flour | 20 - 25 |
| Barley meal | 5 - 9 |
| Grains of hazel-nuts | 5 - 9 |
| Vegetable fibres | 5 - 9 |
| Cream aroma | 0.10-0.30 |
| Chocolate aroma | 0.10-0.30 |

The vegetable fibres can be variously, e.g. cereals, fruits, etc.

The ingredient percentages may be changed according to taste and nutritive values. Nutritive values expressed in percent by total weight are listed in the Table 2 below.

**Table 2**

| | |
|---|---|
| Proteins | 6 |
| Fats | 16 |
| Carbohydrates | 40 |

The internal space 5 of the container is designed to receive ice-cream or cold cream (not shown) through the opening 4.

When the edible container is used to obtain a packaged product, the manufacturing process comprises the steps of: positioning empty edible containers over container-holders, that e.g. conventionally are fed with a reciprocating motion being guided sideways by two conveyor chains; proportioned feeding by injection ice-cream or cold cream through orifices operated at the same time with the location of the edible containers and matching their opening 4; freezing and cooling the product so obtained; and conveying the same to a packaging station.

Through the same opening 4 the ice-cream is drawn to be eaten e.g. with an ice-cream spoon; alternatively, the container and the ice-cream or cold cream therein contained are eaten greedily; or the container is biten and the ice-cream is licked.

The present invention has been explained with reference to a specific embodiment thereof. However, it should be appreciated that changes, additions and/or omissions can be made without departing from the scope of the invention, which is defined by the following claims.

## Claims

1. Edible container for ice-creams and cold creams, having a structure made of a moulded and oven cooked short pastry, comprising walls that are internally covered by a film of aromatized vegetable oil as a protective barrier and enclose an internal space, designed to receive ice-cream or cold cream and communicating with the outside through at least an opening, **characterised in that** said short pastry includes the following ingredients and the relative ranges expressed in percent by weight:
| | |
|---|---|
| Icing sugar | 15 - 25 |
| Margarine MV1 | 8 - 15 |
| Albumen | 4 - 10 |
| Fresh milk | 5 - 15 |
| Wheat flour | 20 - 25 |
| Barley meal | 5 - 9 |
| Grains of hazel-nuts | 5 - 9 |
| Vegetable fibres | 5 - 9 |
| Cream aroma | 0.10 - 0.30 |
| Chocolate aroma | 0.10 - 0.30 |

## Patentansprüche

1. Essbarer Behälter für Speiseeis oder halbgefrorene Cremespeisen der aus gespritztem und gebackenem Mürbteig besteht, Wände aufweist, die auf der Innenseite mit einer Schutzschicht aus aromatisiertem Pflanzenöl versehen sind und einen Raum für die Aufnahme von Speiseeis oder halbgefrorenen Cremespeisen umschließen, der mit der Außenseite durch mindestens eine Öffnung verbunden ist. Der genannte Mürbteig ist durch die folgenden Zutaten in folgenden, in Prozent pro Gewicht ausgedrückten Verhältnissen gekennzeichnet:
| | |
|---|---|
| Puderzucker | 15 - 25 |
| Margarine MV1 | 8 - 15 |
| Eiweiß | 4 - 10 |
| Frischmilch | 5 - 15 |
| Weizenmehl | 20 - 25 |
| Gerstenpulver | 5 - 9 |
| Haselnusskörner | 5 - 9 |
| Pflanzenfasern | 5 - 9 |
| Sahnearoma | 0,10 - 0,30 |
| Schokoladenaroma | 0,10 - 0,30 |

## Revendications

1. Récipient comestible pour glace et crème fraîche, doté d'une structure en pâte brisée moulée et cuite au four et de parois intérieures renfermant un espace clos et recouvertes d'une pellicule d'huile végétale aromatisée faisant office d'écran protecteur, destiné à recevoir de la glace ou de la crème fraîche et communiquant avec l'extérieur par le biais d'un orifice au minimum, **caractérisé par le fait que** ladite pâte brisée comprend les ingrédients suivants dans leurs proportions respectives exprimées en pourcent en poids :
| | | |
|---|---|---|
| Sucre glace | 15 | 25 |
| Margarine MV1 | 8 | 15 |
| Albumine | 4 | 10 |
| Lait frais | 5 | 15 |
| Farine de blé | 20 | 25 |
| Farine d'orge | 5 | 9 |
| Eclats de noisettes | 5 | 9 |
| Fibres végétales | 5 | 9 |
| Arôme crème | 0,10 | 0,30 |
| Arôme chocolat | 0,10 | 0,30 |
